(19) Europäisches Patentamt / European Patent Office / Office européen des brevets

(11) **EP 3 606 226 B1**

(12) **EUROPEAN PATENT SPECIFICATION**

(45) Date of publication and mention
of the grant of the patent:
**17.01.2024 Bulletin 2024/03**

(21) Application number: **18772229.3**

(22) Date of filing: **05.02.2018**

(51) International Patent Classification (IPC):
**H04L 5/00** *(2006.01)* **H04W 72/02** *(2009.01)*
**H04W 88/02** *(2009.01)*

(52) Cooperative Patent Classification (CPC):
**H04W 72/02; H04L 5/0005; H04L 5/0044;**
**H04L 5/0053;** H04W 72/21; H04W 88/02

(86) International application number:
**PCT/CN2018/075331**

(87) International publication number:
**WO 2018/171348 (27.09.2018 Gazette 2018/39)**

(54) **METHOD AND DEVICE FOR INFORMATION TRANSMISSION**

VERFAHREN UND VORRICHTUNG ZUR INFORMATIONSÜBERTRAGUNG

PROCÉDÉ ET DISPOSITIF DE TRANSMISSION D'INFORMATIONS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.03.2017 CN 201710184898**

(43) Date of publication of application:
**05.02.2020 Bulletin 2020/06**

(73) Proprietor: **ZTE Corporation**
**Shenzhen, Guangdong 518057 (CN)**

(72) Inventors:
• **ZHANG, Wen**
**Shenzhen,**
**Guangdong 518057 (CN)**
• **XIA, Shuqiang**
**Shenzhen,**
**Guangdong 518057 (CN)**
• **SHI, Jing**
**Shenzhen,**
**Guangdong 518057 (CN)**
• **REN, Min**
**Shenzhen,**
**Guangdong 518057 (CN)**
• **HAN, Xianghui**
**Shenzhen,**
**Guangdong 518057 (CN)**
• **LIANG, Chunli**
**Shenzhen,**
**Guangdong 518057 (CN)**

(74) Representative: **Vitillo, Giuseppe**
**Barzanò & Zanardo Milano S.p.A.**
**Corso Vittorio Emanuele II, 61**
**10128 Torino (IT)**

(56) References cited:
**EP-A2- 2 164 201        CN-A- 102 858 016**
**CN-A- 106 231 614**

• **LG ELECTRONICS: "Discussion on UL channel
multiplexing in NR", 3GPP DRAFT; R1-1702484
DISCUSSION ON UL CHANNEL MULTIPLEXING
IN NR, 3RD GENERATION PARTNERSHIP
PROJECT (3GPP), MOBILE COMPETENCE
CENTRE ; 650, ROUTE DES LUCIOLES ; F-06921
SOPHIA-ANTIPOLIS CEDEX ; FRA , vol. RAN
WG1, no. Athens, Greece; 20170213 - 20170217
12 February 2017 (2017-02-12), pages 1-6,
XP051209638, Retrieved from the Internet:
URL:http://www.3gpp.org/ftp/Meetings_3GPP_
SYNC/RAN1/Docs/ [retrieved on 2017-02-12]**

- Sony: "Dynamic Resource Sharing for
  eMBB/URLLC in DL Document for: Discussion /
  decision", 3GPP TSG RAN WG1 Meeting #87
  Agenda Item: 7.1.4.4, 1 October 2016
  (2016-10-01), pages 1-5, XP055512898, Retrieved
  from the Internet:
  URL:https://www.3gpp.org/DynaReport/TDocEx
  Mtg--R1-87--31665.htm [retrieved on 2018-10-05]

- Sony: "Dynamic Resource Sharing for
  eMBB/URLLC in DL Document for: Discussion /
  decision", 3GPP TSG RAN WG1 Meeting #87
  Agenda Item: 7.1.4.4, 1 October 2016
  (2016-10-01), pages 1-5, XP055512898, Retrieved
  from the Internet:
  URL:https://www.3gpp.org/DynaReport/TDocEx
  Mtg--R1-87--31665.htm [retrieved on 2018-10-05]

## Description

### TECHNICAL FIELD

Embodiments of the present invention relate to the field of wireless data communication technologies and, in particular, to a method and apparatus for information transmission.

### BACKGROUND

The Enhanced Mobile Broadband (eMBB) service and the Ultra-Reliable Low Latency Communication (URLLC) service in New Radio (NR) network adopt frequency division multiplexing transmission mode. In order to meet the requirement of low transmission latency of the URLLC service, it is a way to reserve sufficient resources for the URLLC service. However, due to a low transmission frequency of the URLLC service and a high reliability requirement, it is necessary to reserve a large number of frequency resources in a case of a short scheduling interval. Therefore, a method of reserving resources will bring a great waste of resources.

An efficient way to support the multiplexing of the URLLC service and the eMBB service is to allow the URLLC service to be transmitted on the resource of the sent eMBB service, that is, the URLLC service and the eMBB service are transmitted on the same resource at the same time, or transmission of the eMBB is suspended or abandoned according to an instruction of the base station and begins after transmission of the URLLC service is completed. But in this way, if Uplink Control Information (UCI) is carried on the eMBB service, the performance of the UCI may be degraded or even the transmission may be abandoned. In addition, when the URLLC service and the eMBB service have different granularities of time scheduling, if the URLLC service and the eMBB service are transmitted on the same resource at the same time, a Demodulation Reference Signal (DMRS) of the URLLC service may be interfered by the data of the eMBB, resulting in a sharp decline in reception performance. A technical literature LG ELECTRONICS: "Discussion on UL channel multiplexing in NR", 3GPP DRAFT; R1-1702484 DISCUSSION ON UL CHANNEL MULTIPLEXING IN NR, 3RD GENERATION PARTNERSHIP PROJECT (3GPP), MOBILE COMPETENCE CENTRE; 650, ROUTE DES LUCIOLES; F06921 SOPHIA-ANTIPOLIS CEDEX; FRANCE, vol. RAN WG1, no. Athens, Greece; 20170213-20170217 12 February 2017 (2017-02-12), XP051209638. A technical literature Sony: "Dynamic Resource Sharing for eMBB/URLLC in DL Document for: Discussion/decision", 3GPP TSG RAN WG1 Meeting #87 Agenda Item: 7.1.4.4.1 October 2016 (2016-10-01), XP055512898.

### SUMMARY

In view of this, embodiments of the present invention provide a method and apparatus for information transmission, which at least solve the problems in the existing art and can avoid the influence of the URLLC service on the UCI on the eMBB service, and does not cause interference to the DMRS of the URLLC service. The invention is set out in the appended set of claims.

### BRIEF DESCRIPTION OF DRAWINGS

FIG. 1 is a flowchart 1 of a method for information transmission according to an embodiment of the present invention;
FIG. 2 is a flowchart 2 of a method for information transmission according to an embodiment of the present invention;
FIG. 3 is a schematic diagram of time domain and frequency domain resource transmission of eMBB service data and URLLC service data;
FIG. 4 is a flowchart 3 of a method for information transmission according to an embodiment of the present invention;
FIG. 5 is a schematic diagram 1 of transmission resource mapping according to an embodiment of the present invention;
FIG. 6 is a schematic diagram 2 of transmission resource mapping according to an embodiment of the present invention;
FIG. 7 is a flowchart 4 of a method for information transmission according to an embodiment of the present invention;
FIG. 8 is a flowchart 5 of a method for information transmission according to an embodiment of the present invention;
FIG. 9 is a schematic diagram 3 of transmission resource mapping according to an embodiment of the present invention;
FIG. 10 is a schematic diagram 4 of transmission resource mapping according to an embodiment of the present invention;
FIG. 11 is a flowchart 6 of a method for information transmission according to an embodiment of the present invention;

FIG. 12 is a flowchart 7 of a method for information transmission according to an embodiment of the present invention;

FIG. 13 is a schematic diagram 5 of transmission resource mapping according to an embodiment of the present invention; and

FIG. 14 is a structural diagram of an apparatus for information transmission according to an embodiment of the present invention.

## DETAILED DESCRIPTION

The present invention will be described below in detail with reference to the drawings and embodiments. It is to be understood that the embodiments provided herein are intended to explain and not to limit the present invention.

In the research process, the inventors found that in the 3rd Generation Partnership Project (3GPP) NR requirement report, it is clearly stated that the NR network needs to support URLLC low latency and high reliability service.

Performance indicators of the URLLC service include two, namely, user plane average latency and reliability. For the user plane latency, the average latency is 0.5 ms in both the uplink and the downlink. For the reliability, 99.999% reliable transmission within 1 ms under certain channel conditions is required for a packet having a given size. This will require the URLLC service to have a shorter scheduling interval. For example, 125 microseconds is adopted as the length of a slot, or the length of two Orthogonal Frequency Division Multiplexing (OFDM) symbols with a common Cyclic Prefix (CP) of and on which an interval between two subcarriers is 15 kHz is taken as the length of a slot. The slot here is taken as a scheduling unit, and the length of the slot is the scheduling interval. In order to distinguish a scheduling interval of the URLLC service from a subsequent scheduling interval of the eMBB service, the scheduling interval of the URLLC service is referred to as a second scheduling interval, and the URLLC service data is referred to as a second-type data.

The eMBB service in the NR has a more relaxed latency requirement than the URLLC, the user plane average latency is 4ms in both the uplink and the downlink. Therefore, a base station may schedule the eMBB service data with a longer scheduling interval, thus reducing the control channel overhead caused by frequent scheduling. For example, 0.5 ms or 1 ms is used as a scheduling interval, the scheduling interval of the eMBB service is referred to as a first scheduling interval, and the eMBB service data is referred to as a first-type data.

Since the URLLC service requires a very low transmission latency, the waiting time in the queue must be short, and an uplink service needs to be sent out from the terminal quickly. The way of reserving the transmission resource for the URLLC service will cause a waste of resources, which is not a good solution for an NR network to support the URLLC service. The way of sharing the transmission resource between the eMBB service and the URLLC service will affect the transmission of the UCI of the eMBB service and cause interference in the DMRS of the URLLC service.

In the embodiments of the present invention, an eMBB User Equipment (UE) determines a resource sharing manner of the eMBB UE and the URLLC UE; the information is transmitted on a specified transmission resource in the corresponding resource transmission mode based on the determined resource sharing manner. The information includes at least one of Uplink Control Information (UCI) or service data information.

Embodiment one

The embodiment is described by taking a UE transmitting an eMBB service in the 5th-Generation (5G) mobile communication technology as an example, and the method provided in the embodiment is not limited to this scenario.

In the embodiment, a resource in a system includes a first resource. The first resource is used for being shared by an eMBB service and an URLLC service, that is, transmission of the URLLC service of other UEs may occur during the transmission process of the eMBB service, the UE transmitting the URLLC service and the UE transmitting the eMBB service may perform transmission simultaneously on the same resource, and a base station may adopt a Successive Interference Cancellation (SIC) receiver for reception; or if an instruction sent by the base station is received during transmission of the eMBB service , the transmission will be abandoned or stopped at part of transmission time, which is used for other UEs transmitting the URLLC services to perform transmission.

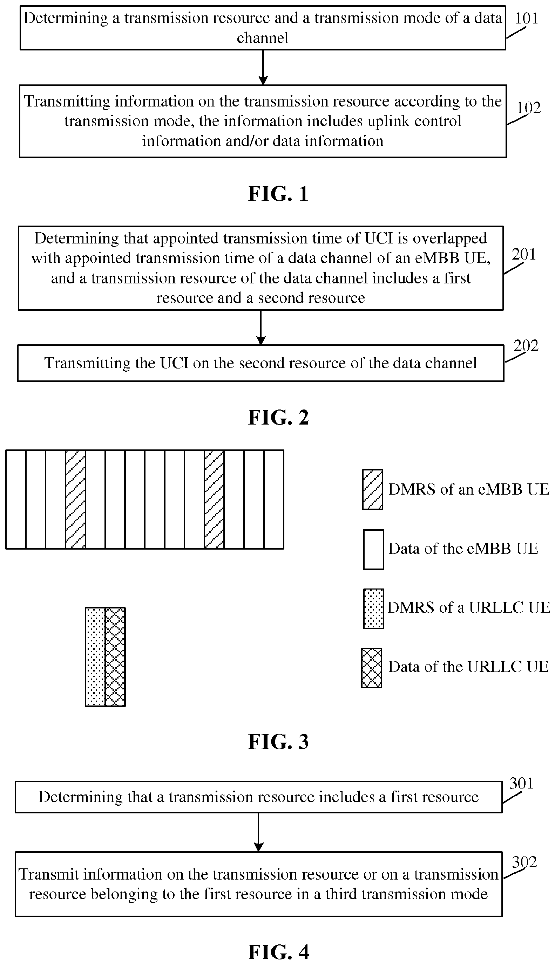

FIG. 1 is a flowchart 1 of a method for information transmission according to an embodiment of the present invention. In the embodiment of the present invention, the resource used for the eMBB UE to transmit the information is at least partially shared by the URLLC UE. As shown in FIG. 1, the information transmission method in the embodiment of the present invention includes steps described below.

In step 101, a transmission resource and a transmission mode of a data channel are determined.

In practical applications, the transmission resource of the data channel may be configured by a base station or preset.

The transmission mode of the data channel may be determined in a manner described below.

In condition that appointed transmission time of UCI is overlapped with appointed transmission time of the data channel, and the transmission resource of the data channel includes a first resource, the transmission mode of the data channel is determined as a first transmission mode.

Here, the eMBB UE may determine that the appointed transmission time of the UCI is overlapped with the appointed transmission time of the data channel through indication information of the base station. The first resource is notified by the base station or is preset. For example, the base station notifies the first resource to be Physical Resource Blocks (PRBs)#0 to 49 through System Information Block (SIB) signaling.

In an embodiment, the resources in the system may include, in addition to the first resource, other resources, such as exclusive resources, if resources scheduled by the base station to the UE are all the exclusive resources, no influence from other UEs exists in a transmission process. Here, on the resource, Multi-User Multiple-Input Multiple-Output (MU-MIMO) is allowed between UEs. In practical applications, definitions of the first resource and other resources are not limited thereto.

In an embodiment, the first resource is continuous or discrete, that is, the resource may be continuous or discrete in the time domain and/or the frequency domain.

When the UE receives an uplink grant sent by the base station, the transmission resource of the uplink data channel indicated in the uplink grant belongs to the first resource, or part of the transmission resource of the uplink data channel indicated in the uplink grant belongs to the first resource.

In step 102, information is transmitted on the transmission resource according to the transmission mode, where the information includes Uplink Control Information and/or data information.

In practical applications, the step 102 may include that eMBB service data information is transmitted on the data channel according to the first transmission mode, and the UCI is transmitted on a control channel of the eMBB UE.

Here, when the UCI needs to be transmitted, or when the appointed transmission time of the UCI is overlapped with appointed transmission time of the uplink data channel, the UCI is transmitted on the uplink control channel instead of in a piggyback manner, and uplink data is transmitted on the uplink data channel, that is, the uplink control channel and the uplink data channel are transmitted simultaneously.

The control channel for transmitting the UCI is indicated by the base station or is obtained in a preset manner.

In practical applications, the appointed transmission time of the UCI may completely or partially overlap with the appointed transmission time of the uplink data channel, for example, the appointed transmission time of the UCI is a subset of the appointed transmission time of the uplink data channel. The description here is also used in other parts of the embodiment.

One example is as follows: the first resource is PRBs#0 to 49 in a system bandwidth, a transmission resource of the uplink data channel scheduled by the base station is PRBs#0 to 9, the appointed transmission time of the uplink data channel is slots#0 to 5, and the appointed transmission time of the UCI is slot#3. A resource corresponding to the uplink control channel is PRB#80, and then in the slot#3, the UE transmits the UCI on the uplink control channel on the PRB#80 and transmits the data on the uplink data channel on the PRBs#0 to 9, that is, the eMBB UE transmits two channels at the same time. Whether the base station configures simultaneous transmission on the uplink data channel and the uplink service channel is not considered here.

With the above embodiment of the present invention, the eMBB UE determines that when the appointed transmission time of the UCI is overlapped with the appointed transmission time of the data channel, and the transmission resource of the data channel includes a shared resource, the UCI is transmitted on the control channel rather than on the data channel. Thus, the influence of transmission of the URLLC service data on the transmission of the UCI of the eMBB service is avoided.

Embodiment two

The embodiment is described by taking a UE transmitting an eMBB service in a 5G system as an example, and the method provided in the embodiment is not limited to this scenario.

In the embodiment, a resource in a system includes a first resource and a second resource. The first resource is used for being shared by an eMBB service and an URLLC service, that is, transmission of the URLLC services of other UEs may occur during the transmission of the eMBB service, the UE transmitting the URLLC service and the UE transmitting the eMBB service may perform transmission simultaneously on the same resource, and a base station may adopt a SIC receiver for reception; or if an instruction sent by the base station is received during transmission of the eMBB service , the transmission will be abandoned or stopped at part of transmission time, which is used for other UEs transmitting the URLLC services to perform transmission. The second resource is a resource that does not belong to the first resource in the transmission resource of the data channel.

FIG. 2 is a flowchart of a method for information transmission according to an embodiment of the present invention. As shown in FIG. 2, the information transmission method includes steps described below.

In step 201, appointed transmission time of the UCI is determined to be overlapped with appointed transmission time of the data channel of an eMBB UE, and the transmission resource of the data channel includes a first resource and a second resource.

Here, an eMBB UE may know that the appointed transmission time of the UCI is overlapped with the appointed transmission time of the data channel through indication information of the base station or in a preset manner, and the transmission resource of the data channel includes the first resource and the second resource. In practical applications, a resource in a system includes the first resource, and the first resource is a resource for being shared by the eMBB service and the URLLC service, while the first resource included in the transmission resource of the data channel described here may be part of the resource including the first resource, that is, part or all of the transmission resource of the data channel belongs to the first resource.

In practical applications, the eMBB UE receives an uplink grant sent by the base station, and part of the resource in the transmission resource of an uplink data channel indicated in the uplink grant belongs to the first resource. A resource not belonging to the first resource in the transmission resource of the uplink data channel is referred to as the second resource, and a resource belonging to the first resource in the transmission resource of the uplink data channel is referred to as a third resource.

In step 202, the UCI is transmitted on the second resource of the data channel.

In practical applications, when the UCI needs to be transmitted, or when the appointed transmission time of the UCI is overlapped with appointed transmission time of the uplink data channel, the UCI is merely transmitted on the second resource.

In practice, the UCI is merely transmitted on a symbol or slot corresponding to the appointed transmission time of the UCI. For example, transmission time of the uplink data channel is 4 slots, and the appointed transmission time corresponding to the UCI is a third mini-slot of a second slot. Here, it is assumed that a slot is comprised of 6 mini-slots, and then the UCI is transmitted over the third mini-slot of the second slot of the uplink data channel.

In an embodiment, in condition that a transmission mode of SC-FDMA is used in the uplink data channel, the eMBB UE generates SC-FDMA signals on the third resource and the second resource, respectively. That is, on a transmission symbol, an SC-FDMA signal is sent on the third resource, and another SC-FDMA signal is sent on the second resource. The UCI is merely written to an interleaving matrix of the SC-FDMA signal corresponding to the second resource. Manners of writing may be similar to existing manners in LTE or newly defined manners.

Here, the interleaving matrix is described. In an existing LTE system, the SC-FDMA symbol is in the uplink and uplink data and/or the UCI are encoded to generate several bits, the bits are written to an interleaving matrix according to a certain rule, and the interleaving matrix has R rows and C columns, where C is the number of transmission symbols of a PUSCH, and R is the number of modulation symbols written in an SC-FDMA symbol, and each writing position (i.e., each element in a matrix) in the interleaving matrix corresponds to a modulation symbol, that is, each writing position is written with a bit set corresponding to a modulation symbol, i.e., a column vector comprised of the bits. For example, it is assumed that a QPSK symbol is provided, and the column vector is $[0\ 1]^T$, where "T" in the upper right corner represents transposition. After the data and/or the UCI are written to the interleaving matrix, the bits in the interleaving matrix are read out column by column in order, and then read bit streams are modulated, layer mapped, precoded, and resource mapped, and a SC-FDMA signal is generated.

One example is as follows: the first resource is PRBs#0 to 49 in a system bandwidth, a transmission resource scheduled by the base station is PRsB#45 to 59, that is, the PRBs#45 to 49 are the third resource and the PRB#50 to 59 are the second resource. Then, the UE generates the SC-FDMA signal on the PRBs#45 to 49, and it is assumed that a subcarrier width is 15 kHz and a PRB is comprised of 12 subcarriers, and then the SC-FDMA signal is generated by a Discrete Fourier Transform (DFT) having a length of $12 \times (49 - 45 + 1) = 60$. The UE generates the SC-FDMA signal on the PRBs#50 to 59, and the SC-FDMA signal is generated by a DFT having a length of $12 \times (59 - 50 + 1) = 120$. It is assumed that the transmission time is 14 symbols, in condition that UCI needs to be transmitted at this time, the UCI will be written to an interleaving matrix corresponding to PRB#50 to 59, and the interleaving matrix includes 120 rows and 12 columns, where 2 symbols are used for transmitting a DMRS and remaining symbols are used for transmitting data.

In an embodiment, in condition that a transmission mode of Orthogonal Frequency-Division Multiple Access (OFDMA) is used in the uplink data channel, data of the eMBB UE is mapped to all REs, the UCI is mapped merely to all or part of the REs corresponding to the second resource. The UCI is merely mapped to all or part of the REs corresponding to the PRBs#50 to 59.

For example, it is assumed that the first resource is the PRBs#0 to 49 in the system bandwidth, and that the transmission resource scheduled by the base station is the PRBs#45 to 59, that is, the PRBs#45 to 49 are the third resource and the PRBs#50 to 59 are the second resource. Then the UCI is mapped to all or part of the REs corresponding to the PRBs#50 to 59.

With the above embodiment of the present invention, the eMBB UE determines that when the appointed transmission time of the UCI is overlapped with the appointed transmission time of the data channel, the transmission resource of the data channel is comprised of a shared resource and a non-shared resource, and the UCI is transmitted on the non-shared resource corresponding to the data channel. Thus, the influence of transmission of the URLLC service data on transmission of the UCI of the eMBB service is avoided.

Embodiment three

The embodiment is described by taking a UE transmitting an eMBB service in a 5G system as an example, and the method proposed in the embodiment is not limited to this scenario.

In the embodiment, in the transmission process of the UE transmitting the eMBB service, UE transmitting the URLLC service may perform transmission, and at this time, the UE transmitting the eMBB service may occupy the same transmission resource as the UE transmitting the URLLC service.

FIG. 3 is a schematic diagram of time domain and frequency domain resource transmission of eMBB service data and URLLC service data. As shown in FIG. 3, in the transmission process of the UE transmitting the eMBB service, the UE transmitting the URLLC service performs transmission on a fifth symbol and a sixth symbol, and frequency domain transmission resources of the UE transmitting the eMBB service and the UE transmitting the URLLC service also overlap completely or partially. Then, on the fifth symbol, the data of the eMBB service will interfere in a DMRS of the URLLC service, which will affect the demodulation of the URLLC service and thus reduce the performance of the URLLC service.

FIG. 4 is a flowchart of a method for information transmission according to an embodiment of the present invention, and the method is applied to an eMBB UE. As shown in FIG. 4, the information transmission method in the embodiment of the present invention includes steps described below.

In step 301, it is determined that a transmission resource includes a first resource.

Here, resources in a system include the first resource, the first resource is a resource for being shared by the eMBB service and the URLLC service, the first resource included in the transmission resource of the data channel may be part of the resource including the first resource, that is, part or all of the transmission resource of the data channel belongs to the first resource.

In step 302, information is transmitted on the transmission resource or on a transmission resource belonging to the first resource in a third transmission mode.

In practice, the third transmission mode includes a step described below.

A modulation symbol $x_i$ corresponding to a function $f_i(x)$ of a modulation symbol x is transmitted on an i-th RE among N REs on a first transmission symbol, where $i \in \{1, 2, \dots , N\}$, N is an integer greater than or equal to 2; in practical applications, the eMBB UE may perform transmission using OFDMA, and accordingly, a first transmission symbol may be an OFDMA symbol.

One example is as follows: the same modulation symbols x are transmitted on N REs of the first transmission symbol, or the modulation symbols x are transmitted on part of REs among the N REs, modulation symbols corresponding to a function $f(x)$ of the modulation symbols x are transmitted on remaining REs. Here, N is an integer greater than or equal to 2.

In the embodiment, in condition that the UE transmitting the eMBB service performs transmission by using the OFDMA, for the UE transmitting the eMBB service, same data is mapped on preset two REs on a symbol (the first transmission symbol) on which the DMRS of the URLLC service may be transmitted.

In an embodiment, the above-mentioned two REs are adjacent REs or REs with a preset interval. The symbol on which the DMRS of the URLLC service may be transmitted is explained here, for example, a transmission granularity of the eMBB service is a slot, a slot is divided into six mini-slots, and the transmission granularity of the URLLC service is the mini-slot. When an eMBB is transmitted in a slot, the URLLC service may occur in the six mini-slots, it is assumed that the DMRS of the URLLC service is located in the first symbol of a mini-slot, and then the symbol on which the DMRS of the URLLC service may be transmitted is a first symbol of each mini-slot in the slot. In practical applications, the symbol on which the DMRS of the URLLC service may be transmitted does not include a symbol for sending a DMSS of the eMBB.

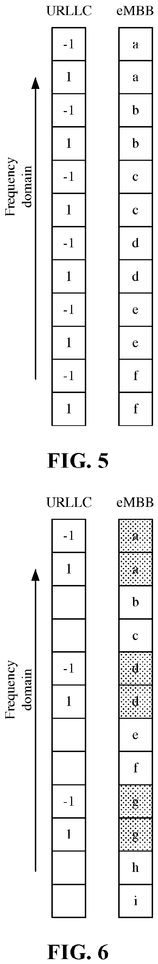

FIG. 5 is a schematic diagram of transmission resource mapping according to an embodiment of the present invention, the eMBB service is transmitted using the OFDMA, the left is a sequence of the DMRS of the URLLC service on the symbol on which the DMRS of the URLLC service may be transmitted, the right is data of the eMBB service on the same symbols, and modulation symbols or data sent on two adjacent REs of the eMBB service are the same. For example, for the eMBB service, "a" is sent on the first two REs, and the corresponding DMRS of the URLLC is "-1" and "1". A base station side may cancel the interference of the data of the eMBB in the URLLC service through superposition of the data signals on the two REs.

In an embodiment, on the symbol on which the DMRS of the URLLC service may be transmitted, the UE transmitting the eMBB service may also map the same data merely on part of the REs in the above-mentioned manner. FIG. 6 is a schematic diagram of transmission resource mapping according to an embodiment of the present invention, the DMRS of the URLLC service is transmitted merely on part of the REs, the data of the eMBB service is sent merely on the REs transmitting the DMRS in a manner of the repeated sending as described above, and the data may be sent on other REs. Positions for the repeated mapping are uniformly distributed and equally spaced in the frequency domain. For example, two REs form an interval in FIG. 6, that is, "a" and "d" are spaced apart by two REs. The frequency domain interval may be preset or notified by an evolved NodeB (eNB).

In an embodiment, on the symbol on which the DMRS of the URLLC service may be transmitted, the UE transmitting the eMBB service may transmit a modulation symbol or a preset function of the modulation symbol on two preset REs, for example, "a" and "-a" are transmitted. The preset function may be $f(x) = x^*$, $f(x) = -x^*f(x) = -x^*$, $f(x) = xf(x) = x$ or $f(x) = -xf(x) = -x$, or the like, where x*denotes a conjugate of x. The present invention is not limited to these examples.

In an embodiment, on the symbol on which the DMRS of the URLLC service may be transmitted, the UE transmitting the eMBB service may transmit a modulation symbol or the preset function of the modulation symbol on N REs, where N is greater than 2, for example, "a", "-a", "a", "-a" are transmitted on four REs, respectively. The N REs may be adjacent or may have the preset interval, and the preset interval between two REs may be the same or different.

In an embodiment, the first transmission symbol includes P1 first resource sets, each of the P1 first resource sets includes the N REs. Here, the frequency domain interval of the P1 first resource sets is a preset value or is configured by the base station eNB, where P1 is a positive integer.

With the above embodiment of the present invention, when the eMBB UE determines that the transmission resource includes the first resource, the same modulation symbols x are transmitted on N REs on a specified transmission symbol, or the modulation symbols x are transmitted on part of REs among the N REs, and modulation symbols corresponding to the function f(x) of the modulation symbols x are transmitted on the remaining REs. Thus the interference of transmission of the eMBB service data in the DMRS of the URLLC service is avoided.

Embodiment four

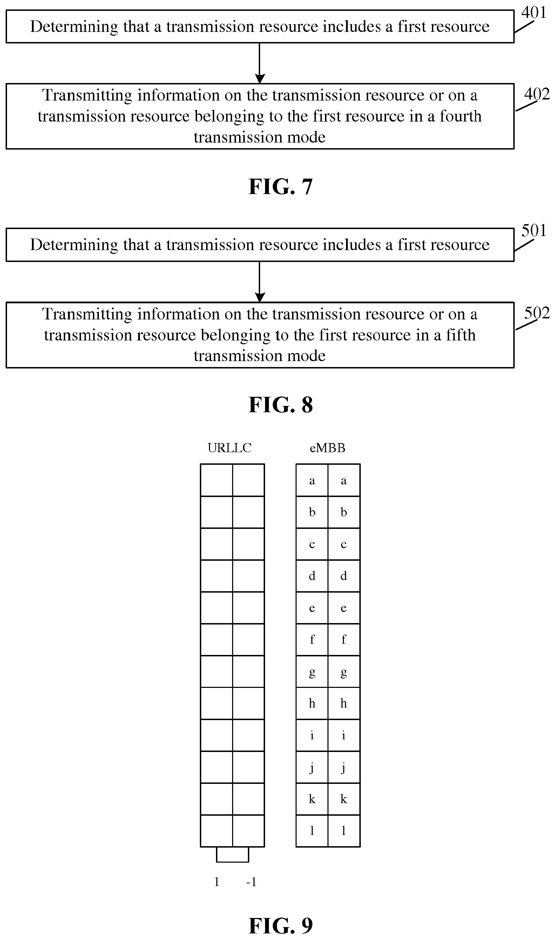

FIG. 7 is a flowchart of a method for information transmission according to an embodiment of the present invention. As shown in FIG. 7, the information transmission method includes steps described below.

In step 401, a transmission resource is determined to include a first resource.

Resources in a system include the first resource, the first resource is a resource for being shared by the eMBB service and the URLLC service, the first resource included in the transmission resource of the data channel may be part of the resource including the first resource, that is, part or all of the transmission resource of the data channel belongs to the first resource.

In step 402, information is transmitted on the transmission resource or on a transmission resource belonging to the first resource in a fourth transmission mode.

In practice, the fourth transmission mode includes a step described below.

A bit set $A_j$ generated by performing a preset transformation $G_j(A)$ on a bit set A is written at a j-th writing position among N writing positions corresponding to a second transmission symbol in an interleaving matrix corresponding to the data channel, where a writing position corresponds to a modulation symbol, the bit set A and the bit set $A_j$ each include n bits, $j \in \{1, 2, ..., A\}$, n is an integer greater than or equal to 1, and N is an integer greater than or equal to 2. In practical applications, an eMBB UE may perform transmission using the SC-FDMA, and accordingly, the first transmission symbol may be an SC-FDMA symbol.

One example is as follows: the same bit sets A are written at N writing positions in an interleaving matrix corresponding to the second transmission symbol, or the bit sets A are written at part of the writing positions among the N writing positions, and bit sets A1 generated by performing the preset transformation on the bit sets A are written at remaining writing positions.

Here, a writing position corresponds to a modulation symbol, the bit set A and the bit set A1 each include n bits, and n is an integer greater than or equal to 1.

In the embodiment, the eMBB service is transmitted using the SC-FDMA, a square in FIG. 5 may be understood as a writing position, each writing position corresponds to a modulation symbol.

On the symbol (a second transmission symbol) on which the DMRS of the URLLC service may be transmitted, the UE transmitting the eMBB service may also map the same data merely at part of the writing positions in the interleaving matrix in the above-mentioned manner. As shown in FIG. 6, the DMRS of the URLLC service is transmitted merely at part of the writing positions, the data of the eMBB service is sent in a manner of the repeated sending as described abovemerely at the writing positions for transmitting the DMRS, and the data may be sent at other writing positions. Positions for the repeated mapping are uniformly distributed and equally spaced in the interleaving matrix. The frequency domain interval may be preset or notified by an eNB.

In the embodiment, the UE transmitting the eMBB service performs transmission using the SC-OFDMA, firstly, transmission information is encoded, then the encoded data is written into the interleaving matrix and then scrambled, modulated, layer mapped and precoded and then RE mapped, and a SC-FDMA signal is generated. For the UE transmitting the eMBB service, the same data is mapped at two preset writing positions in the interleaving matrix on a symbol on which the DMRS of the URLLC service may be transmitted. Here, a writing position corresponds to information of a modulation symbol, for example, it is assumed that Quadrature Phase Shift Keying (QPSK) modulation is provided, 2 bits are written at each writing position. In an embodiment, two positions are in adjacent rows or rows with a fixed interval. In practical applications, the symbol on which the DMRS of the URLLC service may be transmitted does not include the symbol on which the DMRS of the eMBB is sent.

In an embodiment, on the symbol on which the DMRS of the URLLC service may be transmitted, the UE transmitting the eMBB service may transmit a modulation symbol or a preset function of the modulation symbol at two preset writing positions, for example, "a" and "-a" are transmitted. The preset function may be $f(x) = x^*f(x) = x^*$or $f(x) = -xf(x) = -x$, or the like, where $x^*$ denotes a conjugate of x. The present invention is not limited to these examples.

In an embodiment, on the symbol on which the DMRS of the URLLC service may be transmitted, the UE transmitting the eMBB service may transmit a modulation symbol or a preset function of the modulation symbol at N writing positions, where N is greater than 2. For example, "a", "-a", "a", and "-a" are transmitted on four REs, respectively. The N writing positions may be adjacent or may have the preset interval, and the preset interval between two writing positions may be the same or different.

In an embodiment, the writing position corresponding to the second transmission symbol includes P2 second resource sets, each second resource set includes the N writing positions; the row interval of the P2 resource sets in the interleaving matrix is a preset value or is configured by an eNB, where P2 is a positive integer.

With the above embodiment of the present invention, when the eMBB UE determines that the transmission resource includes the first resource, the same bit sets A are written at N writing positions in an interleaving matrix corresponding to the specified transmission symbol, or the bit sets A are written at part of the writing positions among the N writing positions, bit sets A1 generated by performing the preset transformation on the bit sets A are written at remaining writing positions. Thus the interference of transmission of the eMBB service data in the DMRS of the URLLC service is avoided.

Embodiment five

FIG. 8 is a flowchart of a method for information transmission according to an embodiment of the present invention. As shown in FIG. 8, the information transmission method includes steps described below.

In step 501, it is determined that a transmission resource includes a first resource.

Here, resources in a system include the first resource, the first resource is a resource for being shared by the eMBB service and the URLLC service, and the first resource included in the transmission resource of the data channel may be part of the resource including the first resource, that is, part or all of the transmission resource of the data channel belongs to the first resource.

In step 502, information is transmitted on the transmission resource or a transmission resource belonging to the first resource in a fifth transmission mode.

In practice, the fifth transmission mode includes a step described below.

A modulation symbol $x_i$ corresponding to a function $f_i(x)f_i(x)$ of a modulation symbol x is transmitted on an i-th RE among M REs, where $i \in \{1, 2, \cdots, M\}i \in \{1, 2, \cdots, M\}$, the M REs are located on M third transmission symbols, respectively, and M is a positive integer greater than or equal to 2. In practical applications, an eMBB UE may perform transmission using the SC-FDMA, and accordingly, the third transmission symbol may be an OFDMA symbol.

One example is as follows: the same modulation symbols x are transmitted on M REs, or the same modulation symbols x are transmitted on part of REs among the M REs, and modulation symbols corresponding to a function $f(x)$ of the modulation symbols x are transmitted on remaining REs.

Here, the M REs correspond to M third transmission symbols, respectively.

In the embodiment, for the UE transmitting the eMBB service, the same data is mapped on two symbols (the third transmission symbols) on which the DMRS of the URLLC service may be transmitted. FIG. 9 is a schematic diagram of transmission resource mapping according to an embodiment of the present invention, the DMRS of the URLLC is sent on two third transmission symbols, a Zadoff-Chu (ZC) sequence s is transmitted on one of the two third transmission symbols, a sequence of the ZC sequence s multiplied by -1 is transmitted on the other symbol of the two third transmission symbols. The data of the eMBB transmitted on the two third transmission symbols is identical. In an embodiment, the two symbols may be adjacent symbols or symbols with a preset interval.

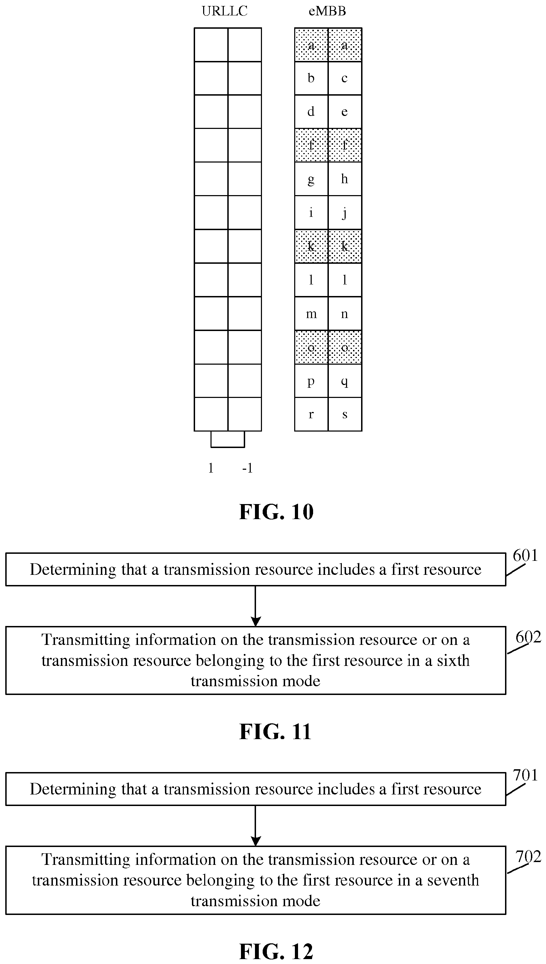

In an embodiment, the UE transmitting the eMBB service may perform mapping in the manner described above on part of REs on the two third transmission symbols. FIG. 10 is a schematic diagram of transmission resource mapping according to an embodiment of the present invention, and positions for the repeated mapping are uniformly distributed and equally spaced in the frequency domain. For example, two REs form an interval in FIG. 10, that is, "a" and "f" are spaced apart by two REs. The frequency domain interval may be preset or notified by an eNB.

In an embodiment, the UE transmitting the eMBB service may transmit a modulation symbol or a preset function of the modulation symbol on two adjacent REs from two symbols, for example, "a" and "-a" are transmitted. The preset function may be $f(x) = x^*$ or $f(x) = -x$, or the like, where $x^*$ denotes a conjugate of x. The present invention is not limited to these examples. For example, a and -a are respectively written in the first two squares in the right diagram in FIG. 10.

In an embodiment, the UE transmitting the eMBB service may transmit a modulation symbol or the preset function of the modulation symbol on N adjacent REs from N symbols, where N is greater than 2. For example, "a", "-a", "a", and "-a" are transmitted on four REs, respectively. The N symbols may be adjacent or may have the preset interval, and the preset interval between two symbols may be the same or different.

In an embodiment, the M third transmission symbols include Q1 third resource sets, each of the Q1 third resource sets includes the M REs, and as the RE pairs aa, ff, kk, and oo in FIG. 10, each RE pair is comprised of two REs.

Here, a frequency domain interval of adjacent third resource sets among the Q1 third resource sets is a preset value or is configured by an eNB.

With the embodiment of the present invention, when an eMBB UE transmission resource includes the first resource, the same modulation symbols x are transmitted on M REs, or the same modulation symbols x are transmitted on part of REs among the M REs, and modulation symbols corresponding to a function $f(x)$ of the modulation symbols x are transmitted on remaining REs. Thus, the interference of transmission of the eMBB service data in the DMRS of the URLLC service is avoided.

Embodiment six

FIG. 11 is a flowchart of a method for information transmission according to an embodiment of the present invention. As shown in FIG. 11, the information transmission method includes steps described below.

In step 601, it is determined that a transmission resource includes a first resource.

Here, resources in a system include the first resource, the first resource is a resource for being shared by the eMBB service and the URLLC service, and the first resource included in the transmission resource of the data channel may be part of the resource including the first resource, that is, part or all of the transmission resource of the data channel belongs to the first resource.

In step 602, information is transmitted on the transmission resource or on a transmission resource belonging to the first resource in a sixth transmission mode.

In practice, the six transmission mode includes a step described below.

A bit set $B_j$ generated by performing a preset transformation $Q_j(B)$ on a bit set B is written at a j-th writing position among M writing positions in an interleaving matrix corresponding to the data channel, where a writing position corresponds to a modulation symbol, the bit set B and the bit set $B_j$ each include n bits, $j \in \{1, 2, \cdots, M\}$, n is an integer greater than or equal to 1, and the M writing positions corresponds to M fourth transmission symbols, respectively. In practical applications, the eMBB UE may perform transmission using the SC-FDMA, and accordingly, the fourth transmission symbol may be an SC-FDMA symbol.

One example is as follows: the same bit sets B are written at M writing positions in an interleaving matrix corresponding to the fourth transmission symbol, or the bit sets B are written at part of the writing positions among the M writing positions, bit sets B 1 generated by performing the preset transformation on the bit sets B are written at remaining writing positions.

Here, a writing position corresponds to a modulation symbol, the bit set B and the bit set B1 each include n bits, and the M writing positions corresponds to the M fourth transmission symbols, respectively.

In the embodiment, for the UE transmitting the eMBB service, the same data is mapped on two symbols (the fourth transmission symbols) on which the DMRS of the URLLC service may be transmitted. As shown in FIG. 9, the DMRS of the URLLC is sent on two fourth transmission symbols, a Zadoff-Chu (ZC) sequence s is transmitted on one of the two fourth transmission symbols, and a sequence of the ZC sequence s multiplied by -1 is transmitted on the other symbol of the two fourth transmission symbols. The data of the eMBB transmitted on the two fourth transmission symbols is identical. In an embodiment, the two symbols may be adjacent symbols or symbols with a preset interval.

In an embodiment, the UE transmitting the eMBB service may perform mapping in the manner described above at part of writing positions on the two fourth transmission symbols, where the definition of the writing position is the same as the definition in the above-mentioned embodiment. As shown in FIG. 10, positions for the repeated mapping are uniformly distributed and equally spaced in the frequency domain. The frequency domain interval may be preset or notified by an eNB.

In an embodiment, the UE transmitting the eMBB service may transmit a modulation symbol or a preset function of the modulation symbol at two adjacent writing positions from two symbols, for example, "a" and "-a" are transmitted. The preset function may be $f(x) = x^*$ or $f(x) = -x$, or the like, where $x^*$ denotes a conjugate of x. The present invention is not limited to these examples. For example, a and -a are respectively written in the first two squares in the right diagram in FIG. 10.

In an embodiment, the UE transmitting the eMBB service may transmit a modulation symbol or the preset function of the modulation symbol at N adjacent writing positions from N symbols, where N is greater than 2. For example, "a", "-a", "a", and "-a" are transmitted on four REs, respectively. The N symbols may be adjacent or may have the preset interval, and the preset interval between two symbols may be the same or different.

In an embodiment, the writing position in the interleaving matrix corresponding to the fourth transmission symbol includes Q2 fourth resource sets, each of the Q2 fourth resource sets includes the M writing positions; the row interval of the Q2 fourth resource sets in the interleaving matrix is a preset value or is configured by the base station.

With the embodiment of the present invention, when the eMBB UE determines that the transmission resource includes the first resource, the same bit sets B are written at M writing positions in an interleaving matrix corresponding to a specified transmission symbol, or the bit sets B are written at part of the writing positions among the M writing positions, bit sets B 1 generated by performing the preset transformation on the bit sets B are written at remaining writing positions. Thus, the interference of transmission of the eMBB service data in the DMRS of the URLLC service is avoided.

Embodiment seven

FIG. 12 is a flowchart of a method for information transmission according to an embodiment of the present invention. As shown in FIG. 12, the information transmission method includes steps described below.

In step 701, it is determined that a transmission resource includes a first resource.

Here, resources in a system include the first resource, the first resource is a resource for being shared by the eMBB service and the URLLC service, and the first resource included in the transmission resource of the data channel may be part of the resource including the first resource, that is, part or all of the transmission resource of the data channel belongs to the first resource.

In step 702, information is transmitted on the transmission resource or on a transmission resource belonging to the first resource in a seventh transmission mode.

In practice, the seventh transmission mode includes a step described below.

Service data is transmitted on part of REs of a fifth transmission symbol according to a designated RE mapping rule. In practical applications, the eMBB UE may perform transmission using the OFDMA or SC-FDMA, and accordingly, the fifth transmission symbol may be an OFDMA symbol or an SC-FDMA symbol.

In practical practice, the step may include that on the fifth transmission symbol, the service data is transmitted on preset REs, where the preset REs are part of REs among all the REs included in the fifth transmission symbol for the data channel corresponding to the eMBB service.

In the embodiment, the UE transmitting the eMBB service reserves the resource for the DMRS of the URLLC service that may be transmitted. On the symbol on which the DMRS of the URLLC service may be transmitted, the UE transmitting the eMBB service merely maps the data onto part of subcarriers, such as odd subcarriers. If the UE transmitting the URLLC service needs to perform uplink transmission, the DMRS is sent on even subcarriers.

In practical applications, an index for transmitting the eMBB service may be $n_{RE} \bmod D = m$.

$n_{RE}$ is the index of the RE, numbered from 0 in order of frequency from low to high, D is a preset value, $m \in \{0,1,2,\cdots, D - 1\}$ and $m \neq l$, $l$ is a preset value, and $l \in \{0,1,2, \cdots, D - 1\}$.

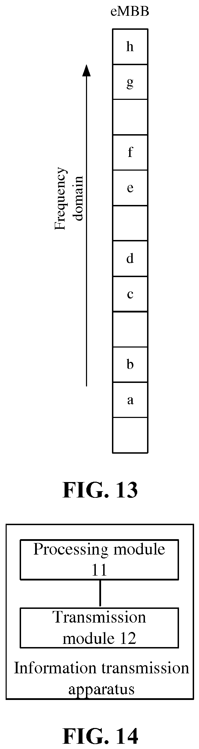

For example, D = 3, $l$ = 0, and then $n_{RE} \bmod 3 = 1$ or 2, and the corresponding RE for transmitting the eMBB data is as shown in FIG. 13.

With the embodiment of the present invention, when the eMBB UE determines that the transmission resource includes the first resource, the resource is reserved for transmitting the DMRS of the URLLC service, and the service data is transmitted on part of REs of the specified transmission symbol according to the preset RE mapping rule. Thus, the interference of transmission of the eMBB service datain the DMRS of the URLLC service is avoided.

Embodiment eight

FIG. 14 is a structural diagram of an apparatus for information transmission according to an embodiment of the present invention. The apparatus is applied to an eMBB UE and is used in a case where a resource for transmitting the information is at least partially shared by the eMBB UE and a high reliability communication URLLC UE. As shown in FIG. 14, the information transmission apparatus in the embodiment of the present invention includes a processing module 11 and a transmission module 12.

The processing module 11 is configured to determine a transmission resource and a transmission mode of a data channel.

The transmission module 12 is configured to transmit information on the transmission resource according to the transmission mode, where the information includes UCI and/or data information.

In an embodiment, the processing module 11 is further configured to determine that the transmission mode of the data channel is a first transmission mode in condition that appointed transmission time of the UCI is overlapped with appointed transmission time of the data channel, and the transmission resource of the data channel includes a first resource.

Accordingly, the transmission module 12 is further configured to transmit the data information on the data channel according to the first transmission mode, and transmit the UCI on a control channel.

A transmission resource of the control channel does not belong to the first resource.

In an embodiment, the processing module 11 is further configured to determine that the transmission mode of the data channel is a second transmission mode in condition that appointed transmission time of the UCI is overlapped with appointed transmission time of the data channel, the transmission resource includes the first resource and a second resource, and the second resource does not belong to the first resource.

Accordingly, the transmission module 12 is further configured to transmit the UCI on the second resource of the data channel in the second transmission mode.

In an embodiment, the processing module 11 is further configured to generate an SC-FDMA signal on the second resource.

The UCI is written to an interleaving matrix corresponding to the SC-FDMA signal.

In an embodiment, the processing module 11 is further configured to determine that the transmission mode of the data channel is a third transmission mode or a fourth transmission mode in condition that the transmission resource includes the first resource.

Accordingly, the transmission module 12 is further configured to transmit the information on the transmission resource or on a transmission resource belonging to the first resource according to the third transmission mode or the fourth transmission mode.

The third transmission mode includes a step described below.

A modulation symbol $x_i$ corresponding to a function $f_i(x)$ of a modulation symbol x is transmitted on an i-th RE among N REs on a first transmission symbol; where $i \in \{1, 2, ..., N\}$.

The fourth transmission mode includes a step described below.

A bit set $A_j$ generated by performing a preset transformation $G_j(A)$ on a bit set A is written at a j-th writing position among N writing positions corresponding to a second transmission symbol in an interleaving matrix corresponding to the data channel, where a writing position corresponds to a modulation symbol, the bit set A and the bit set $A_j$ each include n bits, $j \in \{1, 2, \cdots, N\}$, n is an integer greater than or equal to 1, and N is an integer greater than or equal to 2.

In an embodiment, the N REs are adjacent N REs or N REs with a preset interval.

The N writing positions are adjacent N writing positions in the interleaving matrix or N writing positions with a preset interval in the interleaving matrix.

In an embodiment, the first transmission symbol includes P1 first resource sets, each of the P1 first resource sets includes the N REs.

A writing position corresponding to the second transmission symbol in the interleaving matrix includes P2 second resource sets, each second resource set includes the N writing positions.

P1 and P2 are both positive integers.

In an embodiment, a frequency domain interval of the P1 first resource sets is a preset value or is configured by a base station.

An interval of the P2 second resource sets in the interleaving matrix is a preset value or is configured by the base station.

In an embodiment, the processing module 11 is further configured to determine that the transmission mode of the data channel is a fifth transmission mode or a sixth transmission mode in condition that the transmission resource includes the first resource.

Accordingly, the transmission module 12 is further configured to transmit the information on the transmission resource or on the transmission resource belonging to the first resource according to the fifth transmission mode or the sixth transmission mode.

The fifth transmission mode includes a step described below.

The modulation symbol $x_i$ corresponding to the function $f_i(x)$ of the modulation symbol x is transmitted on an i-th RE among M REs, where $i \in \{1, 2, \cdots, M\}$, the M REs are located on M third transmission symbols, respectively, and M is a positive integer greater than or equal to 2.

The sixth transmission mode includes a step described below.

The bit set $B_j$ generated by performing the preset transformation $Q_j(B)$ on the bit set B is written at a j-th writing position among M writing positions in the interleaving matrix corresponding to the data channel, where a writing position corresponds to a modulation symbol, the bit set B and the bit set $B_j$ each include n bits, $j \in \{1, 2, \cdots, M\}$, n is an integer greater than or equal to 1, and the M writing positions correspond to M fourth transmission symbols, respectively.

In an embodiment, frequency domain resources corresponding to the M REs are the same.

The M writing positions corresponding to a same row in the interleaving matrix are the same.

In an embodiment, the M third transmission symbols are adjacent symbols or symbols with a preset interval.

The M fourth transmission symbols are adjacent symbols or symbols with a preset interval.

In an embodiment, the M third transmission symbols include Q1 third resource sets, each of the Q1 third resource sets includes the M REs.

Writing positions corresponding to the M fourth transmission symbols include Q2 fourth resource sets, each the Q2 fourth resource sets includes the M writing positions.

In an embodiment, a frequency domain interval of the Q1 third resource sets is a preset value or is configured by the base station.

An interval of Q2 fourth resource sets in the interleaving matrix is a preset value or is configured by the base station.

In an embodiment, the $f_i(x)$ is one of the following:

$f_i(x) = x$; $f_i(x) = -x$; $f(x) = -x^*$; or $f(x) = x^*$; where $x^*$ denotes a conjugate of x.

In an embodiment, the processing module 11 is further configured to determine that the transmission mode of the data channel is a seventh transmission mode in condition that the transmission resource includes the first resource.

Accordingly, the transmission module 12 is further configured to transmit the information on the transmission resource or on the transmission resource belonging to the first resource according to the seventh transmission mode.

The third transmission mode includes a step described below.

Data is transmitted on part of REs of a fifth transmission symbol according to a designated RE mapping rule.

In an embodiment, an index of a RE for transmitting data on the fifth transmission symbol satisfies that: $n_{RE}$ mod D = m.

$n_{RE}$ is the index of the RE, numbered from 0 in order of frequency from low to high, D is a preset value, $m \in \{0,1,2, \cdots, D - 1\}$ and $m \neq l$, l is a preset value, and $l \in \{0,1,2, \cdots, D - 1\}$.

In an embodiment, the first resource is preset or is configured by the base station.

An apparatus for information transmission is further provided in an embodiment of the present invention and includes a processor and a memory.

The memory is configured to store a program for information transmission.

The processor is configured to run the program, where when the program is run, steps described below are executed.

A transmission resource and a transmission mode of a data channel are determined.

Information is transmitted on the transmission resource according to the transmission mode, where the information includes Uplink Control Information (UCI) and/or data information.

In an embodiment, the processor is further configured to execute the steps described below when the program is run.

In condition that appointed transmission time of the UCI is overlapped with appointed transmission time of the data channel, and the transmission resource of the data channel includes a first resource, the transmission mode of the data channel is determined as a first transmission mode.

The data information is transmitted on the data channel according to the first transmission mode, and the UCI is transmitted on a control channel.

A transmission resource of the control channel does not belong to the first resource.

In an embodiment, the processor is further configured to execute the steps described below when the program is run.

In condition that appointed transmission time of the UCI is overlapped with appointed transmission time of the data channel, the transmission resource includes the first resource and a second resource, and the second resource does not belong to the first resource, the transmission mode of the data channel is determined as a second transmission mode.

The UCI is transmitted on the second resource of the data channel in the second transmission mode.

In an embodiment, the processor is further configured to execute the steps described below when the program is run.

A single-carrier frequency-division multiple access (SC-FDMA) signal is generated on the second resource.

The UCI is written to an interleaving matrix corresponding to the SC-FDMA signal.

In an embodiment, the processor is further configured to execute the steps described below when the program is run.

In condition that the transmission resource includes the first resource, the transmission mode of the data channel is determined as a third transmission mode or a fourth transmission mode.

The information is transmitted on the transmission resource or on a transmission resource belonging to the first resource according to the third transmission mode or the fourth transmission mode.

The third transmission mode includes a step described below.

A modulation symbol $x_i$ corresponding to a function $f_i(x)$ of a modulation symbol x is transmitted on an i-th Resource Element (RE) among N REs on a first transmission symbol; where $i \in \{1, 2, \cdots, N\}$.

The fourth transmission mode includes a step described below.

A bit set $A_j$ generated by performing a preset transformation $G_j(A)$ on a bit set A is written at a j-th writing position among N writing positions corresponding to a second transmission symbol in an interleaving matrix corresponding to the data channel, where a writing position corresponds to a modulation symbol, the bit set A and the bit set $A_j$ each

include n bits, $j \in \{1, 2, \cdots, N\}$, n is an integer greater than or equal to 1, and N is an integer greater than or equal to 2.

In an embodiment, the processor is further configured to execute the steps described below when the program is run.

In condition that the transmission resource includes the first resource, the transmission mode of the data channel is determined as a fifth transmission mode or a sixth transmission mode.

The information is transmitted on the transmission resource or on the transmission resource belonging to the first resource according to the fifth transmission mode or the sixth transmission mode.

The fifth transmission mode includes a step described below.

The modulation symbol $x_i$ corresponding to the function $f_i(x)$ of the modulation symbol x is transmitted on an i-th RE among M REs, where $i \in \{1, 2, \cdots, M\}$, the M REs are located on M third transmission symbols, respectively, and M is a positive integer greater than or equal to 2.

The sixth transmission mode includes a step described below.

A bit set $B_j$ generated by performing the preset transformation $Q_j(B)$ on the bit set B is written at a j-th writing position among M writing positions in the interleaving matrix corresponding to the data channel, where a writing position corresponds to a modulation symbol, the bit set B and the bit set $B_j$ each include n bits, $j \in \{1, 2, \cdots, M\}$, n is an integer greater than or equal to 1, and the M writing positions correspond to M fourth transmission symbols, respectively.

In an embodiment, the processor is further configured to execute the steps described below when the program is run.

In condition that the transmission resource includes the first resource, the transmission mode of the data channel is determined as a seventh transmission mode.

The information is transmitted on the transmission resource or on the transmission resource belonging to the first resource according to the seventh transmission mode.

The third transmission mode includes a step described below.

Data is transmitted on part of REs of a fifth transmission symbol according to a designated RE mapping rule.

A storage medium is further provided in an embodiment of the present invention. The storage medium includes a stored program, where when the program is run, steps described below are executed. A transmission resource and a transmission mode of a data channel are determined.

Information is transmitted on the transmission resource according to the transmission mode, where the information includes Uplink Control Information (UCI) and/or data information.

In an embodiment, when the program is run, steps described below are further executed.

In condition that appointed transmission time of the UCI is overlapped with appointed transmission time of a data channel, and the transmission resource of the data channel includes a first resource, the transmission mode of the data channel is determined as a first transmission mode.

Data information is transmitted on the data channel according to the first transmission mode, and the UCI is transmitted on a control channel.

A transmission resource of the control channel does not belong to the first resource.

In an embodiment, when the program is run, steps described below are further executed. In condition that appointed transmission time of the UCI is overlapped with appointed transmission time of the data channel, the transmission resource includes the first resource and a second resource, the second resource does not belong to the first resource, the transmission mode of the data channel is determined as a second transmission mode.

The UCI is transmitted on the second resource of the data channel in the second transmission mode.

In an embodiment, when the program is run, steps described below are further executed. An SC-FDMA signal is generated on the second resource.

The UCI is written to an interleaving matrix corresponding to the SC-FDMA signal.

In an embodiment, when the program is run, steps described below are further executed. In condition that the transmission resource includes the first resource, the transmission mode of the data channel is determined as a third transmission mode or a fourth transmission mode.

Information is transmitted on the transmission resource or on a transmission resource belonging to the first resource according to the third transmission mode or the fourth transmission mode.

The third transmission mode includes a step described below.

A modulation symbol $x_i$ corresponding to a function $f_i(x)$ of a modulation symbol x is transmitted on an i-th RE among N REs on a first transmission symbol, where $i \in \{1, 2, ... ,N\}$.

The fourth transmission mode includes a step described below.

A bit set $A_j$ generated by performing a preset transformation $G_j(A)$ on a bit set A is written at a j-th writing position among N writing positions corresponding to a second transmission symbol in an interleaving matrix corresponding to the data channel, where a writing position corresponds to a modulation symbol, the bit set A and the bit set $A_j$ each include n bits, $j \in \{1, 2, ..., A\}$, n is an integer greater than or equal to 1, and N is an integer greater than or equal to 2.

In an embodiment, when the program is run, steps described below are further executed. In condition that the transmission resource includes the first resource, the transmission mode of the data channel is determined as a fifth transmission mode or a sixth transmission mode.

The information is transmitted on the transmission resource or on the transmission resource belonging to the first resource according to the fifth transmission mode or the sixth transmission mode.

The fifth transmission mode includes a step described below.

The modulation symbol $x_i$ corresponding to the function $f_i(x)$ of the modulation symbol x is transmitted on an i-th RE among M REs, where $i \in \{1, 2, \cdots, M\}$, the M REs are located on M third transmission symbols, respectively, and M is a positive integer greater than or equal to 2.

The sixth transmission mode includes a step described below.

A bit set $B_j$ generated by performing the preset transformation $Q_j(B)$ on a bit set B is written at a j-th writing position among M writing positions in the interleaving matrix corresponding to the data channel, where a writing position corresponds to a modulation symbol, the bit set B and the bit set $B_j$ each include n bits, $j \in \{1, 2, \cdots, M\}$, n is an integer greater than or equal to 1, and the M writing positions correspond to M fourth transmission symbols, respectively.

In an embodiment, when the program is run, steps described below are further executed. In condition that the transmission resource includes the first resource, the transmission mode of the data channel is determined as a seventh transmission mode.

The information is transmitted on the transmission resource or on the transmission resource belonging to the first resource according to the seventh transmission mode.

The third transmission mode includes a step described below.

Data is transmitted on part of REs of a fifth transmission symbol according to a designated RE mapping rule.

It is to be noted that the above description of the information transmission apparatus is similar to the above description of the method and the apparatus has the same beneficial effects as the method, which will not be repeated herein. For technical details not disclosed in the information transmission apparatus embodiments of the present invention, reference may be made to the description of the method embodiments of the present invention.

It should be understood by those skilled in the art that all or part of the steps in the method embodiments described above may be implemented by hardware instructed by relevant programs, these programs may be stored in a computer-readable storage medium and, when these programs are executed, steps included in the method embodiments described above are executed; and the preceding storage medium includes: a mobile storage device, a Random Access Memory (RAM), a Read-Only Memory (ROM), a magnetic disk, an optical disk or another medium capable of storing program codes.

Alternatively, the above-mentioned integrated unit of the present invention may also be stored in the computer-readable storage medium if implemented in the form of a software function module and sold or used as an independent product. Based on this understanding, the technical solutions provided by the embodiments of the present invention substantially, or the part contributing to the existing art, may be embodied in the form of a software product. The computer software product is stored in a storage medium and includes several instructions for enabling a computer apparatus (which may be a personal computer, a server or a network apparatus, etc.) to execute all or part of the methods provided by the embodiments of the present invention. The preceding storage medium includes: the mobile storage device, the RAM, the ROM, the magnetic disk, the optical disk or another medium capable of storing program codes.

## INDUSTRIAL APPLICABILITY

In embodiments of the present invention, a transmission resource and a transmission mode of a data channel are determined; information is transmitted on the transmission resource according to the transmission mode, where the information includes Uplink Control Information and/or data information. Thus, the influence of transmission of the URLLC service data on transmission of the UCI of the eMBB service is avoided, and the interference of transmission of the eMBB service data in the DMRS of the URLLC service is avoided.

## Claims

1. A method for information transmission, comprising:

   determining (101) a transmission resource and a transmission mode of a data channel; and
   transmitting (102) information on the transmission resource according to the transmission mode, wherein the information comprises Uplink Control Information, UCI, and data information;
   wherein, in condition that appointed transmission time of the UCI is overlapped with appointed transmission time of the data channel, the transmission resource comprises a first resource and a second resource, and the second resource does not belong to the first resource, the determining the transmission resource and the transmission mode of the data channel comprises:

determining that the transmission mode of the data channel is a second transmission mode;
wherein the second mode comprises: transmitting the UCI on the second resource of the data channel;
accordingly, wherein the transmitting the information on the transmission resource according to the transmission mode comprises:

transmitting the UCI on the second resource of the data channel in the second transmission mode; and
**characterised in that** the method further comprises:

generating a single-carrier frequency-division multiple access, SC-FDMA, signal on the second resource; and
writing the UCI to an interleaving matrix corresponding to the SC-FDMA signal.

2. The method of claim 1, wherein in condition that appointed transmission time of the UCI is overlapped with appointed transmission time of the data channel, and the transmission resource of the data channel comprises the first resource, the determining the transmission mode of the data channel comprises:

determining that the transmission mode of the data channel is a first transmission mode;
wherein the first transmission mode comprises: transmitting the data information on the data channel, and transmitting the UCI on a control channel;
accordingly, wherein the transmitting the information on the transmission resource according to the transmission mode comprises:

transmitting the data information on the data channel according to the first transmission mode, and transmitting the UCI on the control channel; and
wherein a transmission resource of the control channel does not belong to the first resource.

3. The method of claim 1, wherein when the transmission resource comprises the first resource, determining the transmission mode of the data channel comprises:

determining that the transmission mode of the data channel is a third transmission mode or a fourth transmission mode;
accordingly, wherein the transmitting the information on the transmission resource according to the transmission mode comprises:

transmitting the information on the transmission resource or on a transmission resource belonging to the first resource according to the third transmission mode or the fourth transmission mode;
wherein the third transmission mode comprises:
transmitting a modulation symbol $x_i$ corresponding to a function $f_i(x)$ of a modulation symbol x on an i-th Resource Element, RE, among N REs on a first transmission symbol, wherein $i \in \{1, 2, \cdots, N\}$ ; wherein the fourth transmission mode comprises:
writing, at a j-th writing position among N writing positions corresponding to a second transmission symbol in an interleaving matrix corresponding to the data channel, a bit set $A_j$ generated by performing a preset transformation $G_j(A)$ on a bit set A, wherein a writing position corresponds to a modulation symbol, the bit set A and the bit set $A_j$ each comprise n bits, wherein $j \in \{1, 2, \cdots, N\}$, n is an integer greater than or equal to 1, and N is an integer greater than or equal to 2.

4. The method of claim 3,

wherein the N REs are adjacent N REs or N REs with a preset interval; and
wherein the N writing positions are adjacent N writing positions in the interleaving matrix or N writing positions with a preset interval in the interleaving matrix.

5. The method of claim 3,

wherein the first transmission symbol comprises P1 first resource sets, each of the P1 first resource sets comprises the N REs;

wherein a writing position corresponding to the second transmission symbol in the interleaving matrix comprises P2 second resource sets, each of the P2 second resource sets comprises the N writing positions; and

wherein P1 and P2 are both positive integers; or

wherein a frequency domain interval of the P1 first resource sets is a first preset value or is configured by a base station;

wherein an interval of the P2 second resource sets in the interleaving matrix is a second preset value or is configured by the base station.

6. The method of claim 1, wherein when the transmission resource comprises the first resource, the determining the transmission mode of the data channel comprises:

determining that the transmission mode of the data channel is a fifth transmission mode or a sixth transmission mode;

accordingly, wherein the transmitting the information on the transmission resource according to the transmission mode comprises:

transmitting the information on the transmission resource or on a transmission resource belonging to the first resource according to the fifth transmission mode or the sixth transmission mode;

wherein the fifth transmission mode comprises:

transmitting a modulation symbol $x_i$ corresponding to a function $f_i(x)$ of a modulation symbol x on an i-th RE among M REs, wherein $i \in \{1, 2, \cdots, M\}$, wherein the M REs are located on M third transmission symbols, respectively, and M is a positive integer greater than or equal to 2;

wherein the sixth transmission mode comprises:

writing, at a j-th writing position among M writing positions in an interleaving matrix corresponding to the data channel, a bit set $B_j$ generated by performing a preset transformation $Q_j(B)$ on a bit set B, wherein a writing position corresponds to a modulation symbol, the bit set B and the bit set $B_j$ each comprise n bits, wherein $j \in \{1, 2, \cdots, M\}$, n is an integer greater than or equal to 1, and the M writing positions correspond to M fourth transmission symbols, respectively.

7. The method of claim 6,

wherein frequency domain resources corresponding to the M REs are the same; and

wherein the M writing positions corresponding to a same row in the interleaving matrix are the same.

8. The method of claim 6,

wherein the M third transmission symbols are adjacent symbols or symbols with a preset interval; and

wherein the M fourth transmission symbols are adjacent symbols or symbols with a preset interval.

9. The method of claim 6,

wherein the M third transmission symbols comprise Q1 third resource sets, each of the Q1 third resource sets comprises the M REs;

wherein writing positions corresponding to the M fourth transmission symbols comprise Q2 fourth resource sets, each of the Q2 fourth resource sets comprises the M writing positions.

10. The method of claim 6,

wherein a frequency domain interval of Q1 third resource sets is a third preset value or is configured by a base station;

wherein an interval of Q2 fourth resource sets in the interleaving matrix is a fourth preset value or is configured by the base station.

11. The method of claim 3 or 6, wherein $f_i(x)$ is one of the following:

$$f_i(x) = x;$$

$$f_i(x) = -x;$$

$$f(x) = -x^*;$$

or

$$f(x) = x^*;$$

wherein x* is a conjugate of x.

**12.** The method of claim 1, wherein when the transmission resource comprises the first resource, the determining the transmission mode of the data channel comprises:

determining that the transmission mode of the data channel is a seventh transmission mode;
accordingly, wherein transmitting the information on the transmission resource according to the transmission mode comprises:

transmitting the information on the transmission resource or on a transmission resource belonging to the first resource according to the seventh transmission mode;
wherein the seventh transmission mode comprises:

transmitting data on part of REs of a fifth transmission symbol according to a designated RE mapping rule; or
wherein an index of a RE for transmitting data on the fifth transmission symbol satisfies that:
$n_{RE}$ *mod D = m*;
wherein $n_{RE}$ is the index of the RE, which is numbered from 0 in order of frequency from low to high, D is a preset value, $m \in \{0,1,2,\cdots,D - 1\}$ and $m \neq l$, *l* is a preset value, and $l \in \{0,1,2, \cdots, D - 1\}$.

**13.** The method of any one of claims 2 to 10,
wherein the first resource is preset or is configured by the base station.

**14.** An apparatus for information transmission, comprising: a processing module (11) and a transmission module (12);

wherein the processing module (11) is configured to determine a transmission resource and a transmission mode of a data channel;
wherein the transmission module (12) is configured to transmit information on the transmission resource according to the transmission mode, wherein the information comprises Uplink Control Information, UCI, and data information;
wherein, in condition that appointed transmission time of the UCI is overlapped with appointed transmission time of the data channel, the transmission resource includes the first resource and a second resource, and the second resource does not belong to the first resource, the processing module (11) is further configured to determine that the transmission mode of the data channel is a second transmission mode in condition that appointed transmission time of the UCI is overlapped with appointed transmission time of the data channel, the transmission resource includes the first resource and a second resource, and the second resource does not belong to the first resource;
wherein the second mode comprises: transmitting the UCI on the second resource of the data channel;
accordingly, wherein the transmission module (12) is further configured to transmit the UCI on the second resource of the data channel in the second transmission mode;
**characterised in that**
the processing module (11) is further configured to generate an SC-FDMA signal on the second resource, and the UCI is written to an interleaving matrix corresponding to the SC-FDMA signal.

**Patentansprüche**

1. Verfahren zur Informationsübertragung, umfassend: bestimmen (101) einer Übertragungsressource und eines Übertragungsmodus eines Datenkanals; und übertragen (102) von Informationen über die Übertragungsressource gemäß dem Übertragungsmodus, wobei die Informationen Uplink-Steuerinformationen, UCI und Dateninformationen umfassen; worin, unter der Bedingung, dass sich die festgelegte Übertragungszeit des UCI mit der festgelegten Übertragungszeit des Datenkanals überschneidet, die Übertragungsressource eine erste Ressource und eine zweite Ressource umfasst und die zweite Ressource nicht zur ersten Ressource gehört, das Bestimmen der Übertragungsressource und der Übertragungsmodus des Datenkanals umfasst: bestimmen, dass der Übertragungsmodus des Datenkanals ein zweiter Übertragungsmodus ist; wobei der zweite Modus umfasst: Übertragen der UCI auf der zweiten Ressource des Datenkanals; dementsprechend wobei das Übertragen der Informationen auf der Übertragungsressource gemäß dem Übertragungsmodus Folgendes umfasst: übertragen der UCI auf der zweiten Ressource des Datenkanals im zweiten Übertragungsmodus; und **dadurch gekennzeichnet, dass** das Verfahren weiterhin umfasst: erzeugen eines Einzelträger-Frequenzmultiplex-Signals, SC-FDMA, auf der zweiten Ressource; und schreiben des UCI in eine Verschachtelungsmatrix, die dem SC-FDMA-Signal entspricht.

2. Verfahren nach Anspruch 1, wobei unter der Bedingung, dass sich die festgelegte Übertragungszeit der UCI mit der festgelegten Übertragungszeit des Datenkanals überschneidet und die Übertragungsressource des Datenkanals die erste Ressource umfasst, die Bestimmung des Übertragungsmodus des Datenkanals umfasst: bestimmen, dass der Übertragungsmodus des Datenkanals ein erster Übertragungsmodus ist; wobei der erste Übertragungsmodus Folgendes umfasst: Senden der Dateninformationen auf dem Datenkanal und Senden der UCI auf einem Steuerkanal; dementsprechend wobei das Übertragen der Informationen auf der Übertragungsressource gemäß dem Übertragungsmodus Folgendes umfasst: übertragen der Dateninformationen auf dem Datenkanal gemäß dem ersten Übertragungsmodus und Übertragen der UCI auf dem Steuerkanal; und wobei eine Übertragungsressource des Steuerkanals nicht zur ersten Ressource gehört.

3. Verfahren nach Anspruch 1, wobei, wenn die Übertragungsressource die erste Ressource umfasst, das Bestimmen des Übertragungsmodus des Datenkanals Folgendes umfasst: bestimmen, dass der Übertragungsmodus des Datenkanals ein dritter Übertragungsmodus oder ein vierter Übertragungsmodus ist; dementsprechend wobei das Übertragen der Informationen auf der Übertragungsressource gemäß dem Übertragungsmodus Folgendes umfasst: übertragen der Informationen auf der Übertragungsressource oder auf einer zu der ersten Ressource gehörenden Übertragungsressource gemäß dem dritten Übertragungsmodus oder dem vierten Übertragungsmodus; wobei der dritte Übertragungsmodus umfasst: senden eines Modulationssymbols $x_i$ entsprechend einer Funktion $f_i(x)$ eines Modulationssymbols x auf einem i-ten Ressourcenelement RE unter N REs auf einem ersten Übertragungssymbol, wobei $i \in \{1, 2, ..., N\}$ wobei der vierte Übertragungsmodus Folgendes umfasst: schreiben eines Bitsatzes $A_j$, der durch Durchführen einer voreingestellten Transformation $G_j(A)$ an einem Bitsatz A erzeugt wird, an einer j-ten Schreibposition unter N Schreibpositionen, die einem zweiten Übertragungssymbol in einer dem Datenkanal entsprechenden Verschachtelungsmatrix entsprechen, wobei eine Schreibposition einem Modulationssymbol entspricht, der Bitsatz A und der Bitsatz $A_j$ jeweils n Bits umfassen, wobei $j \in \{1, 2, ..., N\}$, n eine ganze Zahl größer oder gleich 1 ist und N eine ganze Zahl größer oder gleich 2 ist.

4. Verfahren nach Anspruch 3, wobei die N REs benachbarte N REs oder N REs mit einem voreingestellten Intervall sind; und wobei die N Schreibpositionen benachbarte N Schreibpositionen in der Verschachtelungsmatrix oder N Schreibpositionen mit einem voreingestellten Intervall in der Verschachtelungsmatrix sind.

5. Verfahren nach Anspruch 3, wobei das erste Übertragungssymbol P1 erste Ressourcensätze umfasst, wobei jeder der P1 ersten Ressourcensätze die N REs umfasst; wobei eine Schreibposition, die dem zweiten Übertragungssymbol in der Verschachtelungsmatrix entspricht, P2 zweite Ressourcensätze umfasst, wobei jeder der P2 zweiten Ressourcensätze die N Schreibpositionen umfasst; und wobei P1 und P2 beide positive ganze Zahlen sind; oder wobei ein Frequenzbereichsintervall der ersten Ressourcensätze P1 ein erster voreingestellter Wert ist oder von einer Basisstation konfiguriert wird; wobei ein Intervall der zweiten Ressourcensätze P2 in der Verschachtelungsmatrix ein zweiter voreingestellter Wert ist oder von der Basisstation konfiguriert wird.

6. Verfahren nach Anspruch 1, wobei, wenn die Übertragungsressource die erste Ressource umfasst, das Bestimmen des Übertragungsmodus des Datenkanals Folgendes umfasst: bestimmen, dass der Übertragungsmodus des Datenkanals ein fünfter Übertragungsmodus oder ein sechster Übertragungsmodus ist; dementsprechend wobei das Übertragen der Informationen auf der Übertragungsressource gemäß dem Übertragungsmodus Folgendes umfasst: übertragen der Informationen auf die Übertragungsressource oder auf eine zur ersten Ressource gehörende Übertragungsressource gemäß dem fünften Übertragungsmodus oder dem sechsten Übertragungsmodus; wobei der fünfte Übertragungsmodus Folgendes umfasst: senden eines Modulationssymbols $x_i$ entsprechend einer Funktion $f_i(x)$ eines Modulationssymbols x auf einem i-ten RE unter M REs, wobei $i \in \{1,2,...,M\}$, wobei sich die M REs auf M dritten Übertragungssymbolen befinden, und M ist eine positive ganze Zahl größer oder gleich 2; wobei der sechste Übertragungsmodus Folgendes umfasst: schreiben eines Bitsatzes $B_j$, der durch Durchführen einer voreingestellten Transformation $Q_j (B)$ an einem Bitsatz B erzeugt wird, an einer j-ten Schreibposition unter M Schreibpositionen in einer Verschachtelungsmatrix, die dem Datenkanal entspricht, wobei eine Schreibposition a entspricht Modulationssymbol umfassen der Bitsatz B und der Bitsatz $B_j$ jeweils n Bits, wobei $j \in \{1,2,...,M\}$, n eine ganze Zahl größer oder gleich 1 ist und die M Schreibpositionen M entsprechen vierte Übertragungssymbole.

7. Verfahren nach Anspruch 6, wobei die Frequenzbereichsressourcen, die den M REs entsprechen, gleich sind; und wobei die M Schreibpositionen, die derselben Zeile in der Verschachtelungsmatrix entsprechen, gleich sind.

8. Verfahren nach Anspruch 6, wobei die M dritten Übertragungssymbole benachbarte Symbole oder Symbole mit einem voreingestellten Intervall sind; und wobei die M vierten Übertragungssymbole benachbarte Symbole oder Symbole mit einem voreingestellten Intervall sind.

9. Verfahren nach Anspruch 6, wobei die M dritten Übertragungssymbole dritte Q1-Ressourcensätze umfassen, wobei jeder der dritten Q1-Ressourcensätze die M REs umfasst; wobei Schreibpositionen, die den M vierten Übertragungssymbolen entsprechen, Q2 vierte Ressourcensätze umfassen, wobei jeder der Q2 vierten Ressourcensätze die M Schreibpositionen umfasst.

10. Verfahren nach Anspruch 6, wobei ein Frequenzbereichsintervall der dritten Q1-Ressourcensätze ein dritter voreingestellter Wert ist oder von einer Basisstation konfiguriert wird; wobei ein Intervall von Q2 vierten Ressourcensätzen in der Verschachtelungs matrix ein vierter voreingestellter Wert ist oder von der Basisstation konfiguriert wird.

11. Verfahren nach Anspruch 3 oder 6, wobei $f_i(x)$ einer der folgenden ist:

$$ f_i(x) = x; \quad f_i(x) = -x; \quad f_i(x) = -x^*; \quad \circ \quad f_i(x) = x^*; $$

wobei x* ein Konjugat von x ist.

12. Verfahren nach Anspruch 1, wobei, wenn die Übertragungsressource die erste Ressource umfasst, das Bestimmen des Übertragungsmodus des Datenkanals Folgendes umfasst: bestimmen, dass der Übertragungsmodus des Datenkanals ein siebter Übertragungsmodus ist; dementsprechend wobei das Übertragen der Informationen auf der Übertragungsressource gemäß dem Übertragungsmodus Folgendes umfasst: übertragen der Informationen auf die Übertragungsressource oder auf eine zur ersten Ressource gehörende Übertragungsressource gemäß dem siebten Übertragungsmodus; wobei der siebte Übertragungsmodus umfasst: übertragen von Daten auf einem Teil von REs eines fünften Übertragungssymbols gemäß einer festgelegten RE-Zuordnungsregel; oder wobei ein Index eines RE zum Übertragen von Daten auf dem fünften Übertragungssymbol Folgendes erfüllt:

$n_{RE} \bmod D$ = m;
wobei $n_{RE}$ der Index des RE ist, der von 0 in der Reihenfolge der Häufigkeit von niedrig nach hoch nummeriert ist, D ein voreingestellter Wert ist, $m \in \{0,1,2,...,D - 1\}$ und $m \neq 1$, 1 ist ein voreingestellter Wert und $l \in \{0,1,2, ... ,D - 1\}$.

13. Verfahren nach einem der Ansprüche 2 bis 10, wobei die erste Ressource voreingestellt ist oder von der Basisstation konfiguriert wird.

14. Vorrichtung zur Informationsübertragung, umfassend: ein Verarbeitungsmodul (11) und ein Übertragungsmodul (12); wobei das Verarbeitungsmodul (11) dazu konfiguriert ist, eine Übertragungsressource und einen Übertragungsmodus eines Datenkanals zu bestimmen; wobei das Übertragungsmodul (12) dazu konfiguriert ist, Informationen über die Übertragungsressource gemäß dem Übertragungsmodus zu übertragen, wobei die Informationen Uplink-Steuerinformationen, UCI und Dateninformationen umfassen; worin, unter der Bedingung, dass sich die festgelegte Übertragungszeit des UCI mit der festgelegten Übertragungszeit des Datenkanals überschneidet, die Übertragungsressource die erste Ressource und eine zweite Ressource umfasst und die zweite Ressource nicht zur ersten Ressource gehört, das Verarbeitungsmodul (11) ist ferner so konfiguriert, dass es bestimmt, dass der Übertragungsmodus des Datenkanals ein zweiter Übertragungsmodus ist, unter der Bedingung, dass sich die festgelegte Übertragungszeit des UCI mit der festgelegten Übertragungszeit des Datenkanals überschneidet, wobei die Übertragungsressource die erste Ressource und eine zweite Ressource umfasst, und die zweite Ressource gehört nicht zur ersten Ressource; wobei der zweite Modus umfasst: Übertragen der UCI auf der zweiten Ressource des Datenkanals; dementsprechend ist das Übertragungsmodul (12) weiterhin dazu konfiguriert, die UCI auf der zweiten Ressource des Datenkanals im zweiten Übertragungsmodus zu übertragen; **dadurch gekennzeichnet** das Verarbeitungsmodul (11) ist weiterhin so konfiguriert, dass es ein SC-FDMA-Signal auf der zweiten Ressource erzeugt, und die UCI wird in eine Verschachtelungsmatrix geschrieben, die dem SC-FDMA-Signal entspricht.

**Revendications**

1. Procédé de transmission d'informations, comprenant: déterminer (101) une ressource de transmission et un mode de transmission d'un canal de données; et transmettre (102) des informations sur la ressource de transmission selon le mode de transmission, les informations comprenant des informations de commande de liaison montante, des UCI et des informations de données; où, à condition que le temps de transmission désigné de l'UCI chevauche le temps de transmission désigné du canal de données, la ressource de transmission comprend une première ressource et une seconde ressource, et la seconde ressource n'appartient pas à la première ressource, la détermination de la ressource de transmission et le mode de transmission du canal de données comprend: déterminer que le mode de transmission du canal de données est un deuxième mode de transmission; le deuxième mode comprenant: la transmission de l'UCI sur la deuxième ressource du canal de données; par conséquent, la transmission des informations sur la ressource de transmission selon le mode de transmission comprend: transmettre les UCI sur la seconde ressource du canal de données dans le second mode de transmission; et **caractérisé en ce que** le procédé comprend en outre: générer un signal d'accès multiple par répartition en fréquence à porteuse unique, SC-FDMA, sur la seconde ressource; et écrire l'UCI dans une matrice d'entrelacement correspondant au signal SC-FDMA.

2. Procédé selon la revendication 1, dans lequel, à condition que le temps de transmission désigné de l'UCI chevauche le temps de transmission désigné du canal de données, et que la ressource de transmission du canal de données comprend la première ressource, la détermination du mode de transmission du canal de données comprend: déterminer que le mode de transmission du canal de données est un premier mode de transmission; le premier mode de transmission comprenant: la transmission des informations de données sur le canal de données, et la transmission de l'UCI sur un canal de commande; par conséquent, la transmission des informations sur la ressource de transmission selon le mode de transmission comprend: transmettre les informations de données sur le canal de données selon le premier mode de transmission, et transmettre les UCI sur le canal de commande; et une ressource de transmission du canal de commande n'appartenant pas à la première ressource.

3. Procédé selon la revendication 1, dans lequel lorsque la ressource de transmission comprend la première ressource, la détermination du mode de transmission du canal de données comprend: déterminer que le mode de transmission du canal de données est un troisième mode de transmission ou un quatrième mode de transmission; par conséquent, la transmission des informations sur la ressource de transmission selon le mode de transmission comprend: transmettre les informations sur la ressource de transmission ou sur une ressource de transmission appartenant à la première ressource selon le troisième mode de transmission ou le quatrième mode de transmission; dans lequel le troisième mode de transmission comprend: transmettre un symbole de modulation $x_i$ correspondant à une fonction $f_i(x)$ d'un symbole de modulation x sur un i-ième élément de ressource, RE, parmi N RE sur un premier symbole de transmission, dans lequel $i \in \{1, 2, \cdots, N\}$ dans lequel le quatrième mode de transmission comprend: écrire, à une j-ième position d'écriture parmi N positions d'écriture correspondant à un deuxième symbole de transmission dans une matrice d'entrelacement correspondant au canal de données, un ensemble de bits $A_j$ généré en effectuant une transformation prédéfinie $G_j(A)$ sur un ensemble de bits A, dans lequel une position d'écriture correspond à un symbole de modulation, l'ensemble de bits A et l'ensemble de bits $A_j$ comprennent chacun n bits, où $j \in \{1, 2, ..., N\}$, n est un nombre entier supérieur ou égal à 1, et N est un nombre entier supérieur ou égal à 2.

4. Procédé selon la revendication 3, dans lequel les N RE sont des N RE adjacents ou des N RE avec un intervalle prédéfini; et dans lequel les N positions d'écriture sont N positions d'écriture adjacentes dans la matrice d'entrelacement ou N positions d'écriture avec un intervalle prédéfini dans la matrice d'entrelacement.

5. Procédé selon la revendication 3, dans lequel le premier symbole de transmission comprend P1 premiers ensembles de ressources, chacun des P1 premiers ensembles de ressources comprend les N RE; dans lequel une position d'écriture correspondant au deuxième symbole de transmission dans la matrice d'entrelacement comprend P2 deuxièmes ensembles de ressources, chacun des P2 deuxièmes ensembles de ressources comprend les N positions d'écriture; et dans lequel P1 et P2 sont tous deux des nombres entiers positifs; ou dans lequel un intervalle de domaine fréquentiel des P1 premiers ensembles de ressources est une première valeur prédéfinie ou est configuré par une station de base; un intervalle des P2 seconds ensembles de ressources dans la matrice d'entrelacement étant une seconde valeur prédéfinie ou étant configuré par la station de base.

6. Procédé selon la revendication 1, dans lequel lorsque la ressource de transmission comprend la première ressource, la détermination du mode de transmission du canal de données comprend: déterminer que le mode de transmission du canal de données est un cinquième mode de transmission ou un sixième mode de transmission; par conséquent, la transmission des informations sur la ressource de transmission selon le mode de transmission comprend: transmettre les informations sur la ressource de transmission ou sur une ressource de transmission appartenant à la première ressource selon le cinquième mode de transmission ou le sixième mode de transmission; dans lequel le cinquième mode de transmission comprend: transmettre un symbole de modulation $x_i$ correspondant à une fonction $f_i(x)$ d'un symbole de modulation x sur un i-ème RE parmi M RE, dans lequel $i \in \{1,2,...,M\}$, dans lequel les M RE sont situés sur M troisièmes symboles de transmission, respectivement, et M est un nombre entier positif supérieur ou égal à 2; dans lequel le sixième mode de transmission comprend: écrire, à une j-ième position d'écriture parmi M positions d'écriture dans une matrice d'entrelacement correspondant au canal de données, un ensemble de bits $B_j$ généré en effectuant une transformation prédéfinie $Q_j(B)$ sur un ensemble de bits B, dans lequel une position d'écriture correspond à un symbole de modulation, l'ensemble de bits B et l'ensemble de bits $B_j$ comprennent chacun n bits, dans lequel $j \in \{1,2,...,M\}$, n est un nombre entier supérieur ou égal à 1, et les M positions d'écriture correspondent à M quatrièmes symboles de transmission, respectivement.

7. Procédé selon la revendication 6, les ressources du domaine fréquentiel correspondant aux M RE étant les mêmes; et dans lequel les M positions d'écriture correspondant à une même ligne dans la matrice entrelacée sont les mêmes.

8. Procédé selon la revendication 6, dans lequel les M troisièmes symboles de transmission sont des symboles adjacents ou des symboles à intervalle prédéfini; et dans lequel les M quatrièmes symboles de transmission sont des symboles adjacents ou des symboles avec un intervalle prédéfini.

9. Procédé selon la revendication 6, dans lequel les M troisièmes symboles de transmission comprennent Q1 troisièmes ensembles de ressources, chacun des Q1 troisièmes ensembles de ressources comprend les M RE; dans lequel les positions d'écriture correspondant aux M quatrièmes symboles de transmission comprennent Q2 quatrièmes ensembles de ressources, chacun des Q2 quatrièmes ensembles de ressources comprend les M positions d'écriture.

10. Procédé selon la revendication 6, dans lequel un intervalle de domaine fréquentiel de Q1 troisièmes ensembles de ressources est une troisième valeur prédéfinie ou est configuré par une station de base; dans lequel un intervalle de Q2 quatrièmes ensembles de ressources dans la matrice d'entrelacement est une quatrième valeur prédéfinie ou est configuré par la station de base.

11. Procédé selon la revendication 3 ou 6, dans lequel $f_i(x)$ est l'un des éléments suivants: $f_i(x) = x$; $f_i(x) = -x$; $f_i(x) = -x^*$; ou $f_i(x) = x^*$; où $x^*$ est un conjugué de x.

12. Procédé selon la revendication 1, dans lequel lorsque la ressource de transmission comprend la première ressource, la détermination du mode de transmission du canal de données comprend: déterminer que le mode de transmission du canal de données est un septième mode de transmission; par conséquent, la transmission des informations sur la ressource de transmission selon le mode de transmission comprend: transmettre les informations sur la ressource de transmission ou sur une ressource de transmission appartenant à la première ressource selon le septième mode de transmission; dans lequel le septième mode de transmission comprend: transmettre des données sur une partie des RE d'un cinquième symbole de transmission selon une règle de mappage de RE désignée; ou dans lequel un index d'un RE pour transmettre des données sur le cinquième symbole de transmission satisfait à ce qui suit: $n_{RE} \ mod \ D = m$; où $n_{RE}$ est l'indice du RE, qui est numéroté de 0 par ordre de fréquence de bas en haut, D est une valeur prédéfinie, $m \in \{0,1,2,...,D-1\}$ et $m \neq l$, l est une valeur prédéfinie, et $l \in \{0,1,2,...,D-1\}$.

13. Procédé selon l'une quelconque des revendications 2 à 10, la première ressource étant prédéfinie ou configurée par la station de base.

14. Appareil de transmission d'informations, comprenant: un module de traitement (11) et un module de transmission (12); le module de traitement (11) étant configuré pour déterminer une ressource de transmission et un mode de transmission d'un canal de données; le module de transmission (12) étant configuré pour transmettre des informations sur la ressource de transmission selon le mode de transmission, les informations comprenant des informations de commande de liaison montante, des UCI et des informations de données; où, à condition que le temps de transmission désigné de l'UCI chevauche le temps de transmission désigné du canal de données, la ressource de transmission comprend la première ressource et une seconde ressource, et la seconde ressource n'appartient pas à la première ressource, le module de traitement (11) est en outre configuré pour déterminer que le mode de transmission du canal de données est un deuxième mode de transmission à condition que le temps de transmission désigné de l'UCI chevauche le temps de transmission désigné du canal de données, la ressource de transmission comprend la première ressource et une seconde ressource, et la deuxième ressource n'appartient pas à la première ressource; le deuxième mode comprenant: la transmission de l'UCI sur la deuxième ressource du canal de données; par conséquent, le module de transmission (12) étant en outre configuré pour transmettre les UCI sur la deuxième ressource du canal de données dans le deuxième mode de transmission; **caractérisé en ce que** le module de traitement (11) est en outre configuré pour générer un signal SC-FDMA sur la seconde ressource, et l'UCI est écrite dans une matrice entrelacée correspondant au signal SC-FDMA.

| Determining a transmission resource and a transmission mode of a data channel | 101 |

| Transmitting information on the transmission resource according to the transmission mode, the information includes uplink control information and/or data information | 102 |

**FIG. 1**

| Determining that appointed transmission time of UCI is overlapped with appointed transmission time of a data channel of an eMBB UE, and a transmission resource of the data channel includes a first resource and a second resource | 201 |

| Transmitting the UCI on the second resource of the data channel | 202 |

**FIG. 2**

☐ DMRS of an eMBB UE

☐ Data of the eMBB UE

☐ DMRS of a URLLC UE

☐ Data of the URLLC UE

**FIG. 3**

| Determining that a transmission resource includes a first resource | 301 |

| Transmit information on the transmission resource or on a transmission resource belonging to the first resource in a third transmission mode | 302 |

**FIG. 4**

URLLC    eMBB

| -1 | a |
| 1 | a |
| -1 | b |
| 1 | b |
| -1 | c |
| 1 | c |
| -1 | d |
| 1 | d |
| -1 | e |
| 1 | e |
| -1 | f |
| 1 | f |

Frequency domain

**FIG. 5**

URLLC    eMBB

| -1 | a |
| 1 | a |
|  | b |
|  | c |
| -1 | d |
| 1 | d |
|  | e |
|  | f |
| -1 | g |
| 1 | g |
|  | h |
|  | i |

Frequency domain

**FIG. 6**

| | |
|---|---|
| Determining that a transmission resource includes a first resource | 401 |

Transmitting information on the transmission resource or on a transmission resource belonging to the first resource in a fourth transmission mode — 402

**FIG. 7**

| | |
|---|---|
| Determining that a transmission resource includes a first resource | 501 |

Transmitting information on the transmission resource or on a transmission resource belonging to the first resource in a fifth transmission mode — 502

**FIG. 8**

URLLC          eMBB

| | | | a | a |
|---|---|---|---|---|
| | | | b | b |
| | | | c | c |
| | | | d | d |
| | | | e | e |
| | | | f | f |
| | | | g | g |
| | | | h | h |
| | | | i | i |
| | | | j | j |
| | | | k | k |
| | | | l | l |

1      -1

**FIG. 9**

URLLC      eMBB

| | | | a | a |
|---|---|---|---|---|
| | | | b | c |
| | | | d | e |
| | | | f | f |
| | | | g | h |
| | | | i | j |
| | | | k | k |
| | | | l | l |
| | | | m | n |
| | | | o | o |
| | | | p | q |
| | | | r | s |

1     -1

**FIG. 10**

| Determining that a transmission resource includes a first resource | 601 |
|---|---|

↓

| Transmitting information on the transmission resource or on a transmission resource belonging to the first resource in a sixth transmission mode | 602 |
|---|---|

**FIG. 11**

| Determining that a transmission resource includes a first resource | 701 |
|---|---|

↓

| Transmitting information on the transmission resource or on a transmission resource belonging to the first resource in a seventh transmission mode | 702 |
|---|---|

**FIG. 12**

eMBB

Frequency domain

| h |
| g |
| |
| f |
| e |
| |
| d |
| c |
| |
| b |
| a |
| |

**FIG. 13**

| Processing module 11 |
| Transmission module 12 |
| Information transmission apparatus |

**FIG. 14**

**EP 3 606 226 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **LG ELECTRONICS.** Discussion on UL channel multiplexing in NR. *3GPP DRAFT; R1-1702484 DISCUSSION ON UL CHANNEL MULTIPLEXING IN NR, 3RD GENERATION PARTNERSHIP PROJECT (3GPP), MOBILE COMPETENCE CENTRE; 650, ROUTE DES LUCIOLES; F06921 SOPHIA-ANTIPOLIS CEDEX; FRANCE,* 12 February 2017, vol. RAN WG1 (Athens), 20170213-20170217

- **SONY.** Dynamic Resource Sharing for eMBB/URLLC in DL Document for: Discussion/decision. *3GPP TSG RAN WG1 Meeting #87 Agenda Item: 7.1.4.4.,* 01 October 2016